# DEMANDE DE BREVET EUROPEEN

(11) **EP 1 332 913 A1**
(43) Date de publication de la demande: **06.08.2003**
(21) Numéro de dépôt: 03290265.2
(22) Date de dépôt: 04.02.2003
(51) Int. Cl.: B60M 1/28, B60M 1/30

(54) **Outil et procédé d'usinage de la surface de frottement d'un fil de contact neuf de caténaire au voisinage de sa jonction avec un fil de contact en partie usé**

(30) Priorité: 05.02.2002 FR 0201318
(71) Demandeur: M. Dubuis et Compagnie, 41034 Blois Cedex (FR)
(72) Inventeur: Racault, André, 41000 Saint Sulpice (FR); Gayral, Jacques, 41000 Saint Sulpice (FR)
(74) Mandataire: Chambon, Gérard

(57) **Abrégé**

Outil et procédé d'usinage de la surface de frottement d'un fil de contact neuf de caténaire au voisinage de sa jonction avec un fil de contact en partie usé.

L'invention concerne un outil et un procédé d'usinage de la surface de frottement (6) d'un fil de contact (1) neuf de caténaire au voisinage de sa jonction au moyen d'une griffe de jonction (2) avec un fil de contact (1') en partie usé et qui comporte des moyens de fixation de l'outil sur les deux fils de contact (1,1'), et un moyen d'usinage (21) disposé sur un support (16) monté mobile sur des moyens de guidage (15b).

L'outil selon l'invention est notamment remarquable en ce que les moyens de fixation de l'outil sont disposés de part et d'autre de la griffe de jonction (2) des deux fils, tandis que lesdits moyens de guidage (15b) assurent un guidage en translation dudit moyen d'usinage (21) le long du fil de contact neuf (1) de façon inclinée par rapport à sa surface (6) de frottement afin d'enlever de la matière audit fil neuf sur une hauteur progressivement décroissante ou croissante selon le sens de l'usinage.

## Description

L'invention concerne un outil et un procédé d'usinage de la surface de frottement d'un fil de contact neuf de caténaire au voisinage de sa jonction avec un fil de contact en partie usé.

Une ligne ou un fil de contact est un fil conducteur sous lequel frotte le pantographe d'une locomotive, ou le trolley d'un tramway ou d'un trolleybus. Un tel fil de contact est suspendu au moyen d'un système dénommé caténaire en vue d'assurer un moyen d'alimentation électrique aérien.

Le pantographe d'une locomotive exerce un effort constant du bas vers le haut sur le fil de contact afin d'assurer un contact électrique en continu.

On comprend que de tels fils de contact sont soumis à de fortes contraintes de pression et de frottement qui causent une usure rapide desdits fils et l'obligation d'un remplacement relativement fréquent qui se fait généralement par tronçons.

Pour assembler un tronçon de fil usé avec un tronçon de fil neuf, on utilise des moyens de raccordement tels que des griffes de jonction qui viennent enserrer les deux extrémités des tronçons pour les rabouter, les surfaces qui sont opposées aux surfaces de frottement des conducteurs étant raccordées de manière à être dans le prolongement l'une de l'autre.

On comprend que du fait de l'usure, entre le fil neuf et le fil usé il existe alors une différence d'épaisseur parfois importante pouvant aller jusqu'à plusieurs millimètres, ce qui crée un épaulement indésirable particulièrement gênant au niveau de la jonction. Cet épaulement crée un risque d'arrachement du fil dans un sens par le pantographe en mouvement ou un rebond de celui-ci dans l'autre sens, entraînant alors une usure prématurée ponctuelle au voisinage de la jonction à cause des chocs et de l'arc électrique formé au moment de la rupture et/ou de la reprise du contact électrique.

Pour atténuer ce décalage à l'endroit de la jonction, il est connu de chanfreiner manuellement et sur place cet épaulement au moyen d'une lime ce qui est évidemment mal aisé du fait d'un travail en hauteur et en outre de moins en moins satisfaisant à cause de l'augmentation de la vitesse des trains, ce qui crée des exigences supplémentaires.

Dans le cas de fils raccordés par soudage, il a déjà été imaginé, comme décrit dans le document JP-08011597A, de rectifier la surface de frottement dudit fil, notamment à l'endroit de la soudure, avec un outil d'usinage qui comporte des moyens de fixation de l'outil sur les deux fils de contact, et un moyen d'usinage disposé sur un support monté mobile sur des moyens de guidage.

Un tel outil est cependant inutilisable avec deux fils de contact raboutés par une griffe de jonction.

On a aussi imaginé un chariot de ce type pour rectifier un épaulement formé sous les surface de frottement et à la jonction de deux rails conducteurs s'étant déplacés l'un par rapport à l'autre comme décrit dans le DE-29913339U, ce dispositif étant simplement destiné à faciliter la manipulation d'un outil d'usinage.

Toutefois dans ces deux documents de l'art antérieur il n'est pas question de rattraper progressivement les différences d'épaisseur entre un fil de contact neuf et un fil de contact usé, mais il y a simplement lieu de rectifier une jonction entre deux conducteurs électriques.

Pour effectuer le travail précité et plus particulièrement pour assurer un usinage progressif de la surface de frottement d'un fil de contact neuf au voisinage de sa jonction au moyen d'une griffe avec un fil de contact en partie usé, l'invention propose un outil d'usinage du type précité à propos des documents antérieurs et comportant donc des moyens de fixation de l'outil sur les deux fils de contact et un moyen d'usinage disposé sur un support monté mobile sur des moyens de guidage, mais qui est notamment remarquable en ce que les moyens de fixation de l'outil sont disposés de part et d'autre de la griffe de jonction des deux fils, tandis que lesdits moyens de guidage assurent un guidage en translation dudit moyen d'usinage le long du fil de contact neuf, de façon inclinée par rapport à sa surface de frottement afin d'enlever de la matière audit fil neuf sur une hauteur progressivement décroissante ou croissante selon le sens de l'usinage.

Avec un tel outil selon l'invention, on peut ainsi aisément usiner le fil de contact neuf sur une certaine longueur afin de rattraper progressivement la différence d'épaisseur, l'enlèvement maximum de matière ayant donc lieu au niveau de la jonction des conducteurs.

Par exemple, les moyens de fixation sont constitués par des moyens de serrage qui viennent enserrer les fils de contact de part et d'autre de la griffe de jonction et dans ce cas par exemple , les moyens de serrage, comportent des brides pivotantes et verrouillables en position, destinées à venir s'appliquer sur les surfaces des fils de contact qui sont opposées à leurs surfaces de frottement afin que lesdits fils soient enserrés entre lesdites brides et des plaquettes d'appui disposées en regard des brides sur lesdites surfaces de frottement des fils de contact.

Avantageusement, chaque bride pivotante présente une empreinte en creux de forme correspondante à la surface qui est opposée à la surface de frottement d'un fil de contact, ladite empreinte étant destinée à s'appuyer sur ladite surface tandis que ladite bride peut en outre présenter aussi une extrémité fourchue destinée à venir encercler en partie une tige d'un levier de verrouillage pivotant muni d'une rondelle qui vient s'appuyer sur ladite extrémité de la bride. Par exemple, les plaquettes d'appui sont plates et de préférence amovibles.

Selon un mode de réalisation, le support mobile sur lequel est aménagé le moyen d'usinage est un chariot, tandis que les moyens de guidage en translation dudit chariot comportent des glissières qui sont inclinées par rapport à la surface de frottement du fil neuf du fait des moyens de serrage qui enserrent les fils de contact qui ont des épaisseurs différentes et/ou du fait du réglage desdits moyens de serrage et de préférence, le chariot est entraîné en translation de manière motorisée.

Selon un mode de réalisation avantageux, le moyen d'usinage est une fraise de fraisage en bout, qui est réglable en position dans la direction de son axe de rotation, ladite fraise pouvant, par exemple, être disposée sur le chariot précité de telle manière que son axe de rotation soit légèrement incliné par rapport à une normale aux glissières de guidage du chariot afin que ledit axe de rotation soit sensiblement perpendiculaire aux fils de contact.

De préférence, l'outil comporte une butée destinée à venir au contact de la griffe de jonction des fils afin d'assurer son positionnement longitudinal.

L'outil peut avantageusement comporter en outre des moyens de suspension temporaire sur au moins l'un des fils de contact, lesdits moyens de suspension temporaire comportant par exemple au moins une barrette coulissante destinée à venir au-dessus du fil de contact.

L'invention concerne aussi un procédé d'usinage d'un tel fil de contact neuf d'une caténaire au voisinage de sa jonction avec un fil de contact en partie usé, qui est notamment remarquable en ce qu'il consiste à suspendre temporairement un outil d'usinage au voisinage de ladite jonction, à fixer l'outil sur lesdits fils de part et d'autre de leur jonction, à régler une référence zéro d'un moyen d'usinage sur le fil de contact usé et à déplacer ledit moyen d'usinage le long du fil neuf en s'écartant régulièrement de celui-ci afin de lui enlever de la matière sur une hauteur progressivement décroissante.

L'invention sera bien comprise et d'autres particularités apparaîtront à la lecture de la description qui va suivre et qui se réfère aux dessins annexés dans lesquels :
- la figure 1 montre en élévation un outil selon l'invention,
- la figure 2 est une vue de dessus de la figure 1,
- la figure 3 est une vue en bout du côté droit par rapport à la figure 1,
- la figure 4 montre en perspective l'extrémité représentée à la figure 3,
- la figure 5 est une vue en coupe selon la ligne V-V de la figure 2,
- la figure 6 est une vue en coupe selon la ligne VI-VI de la figure 1,
- la figure 7 est une vue en coupe selon la ligne VII-VII de la figure 2.

Les dessins montrent un mode de réalisation d'un outil selon l'invention donné à titre d'exemple, destiné à usiner un fil de contact neuf 1 d'une caténaire à l'endroit de sa jonction avec un fil de contact en partie usé 1'.

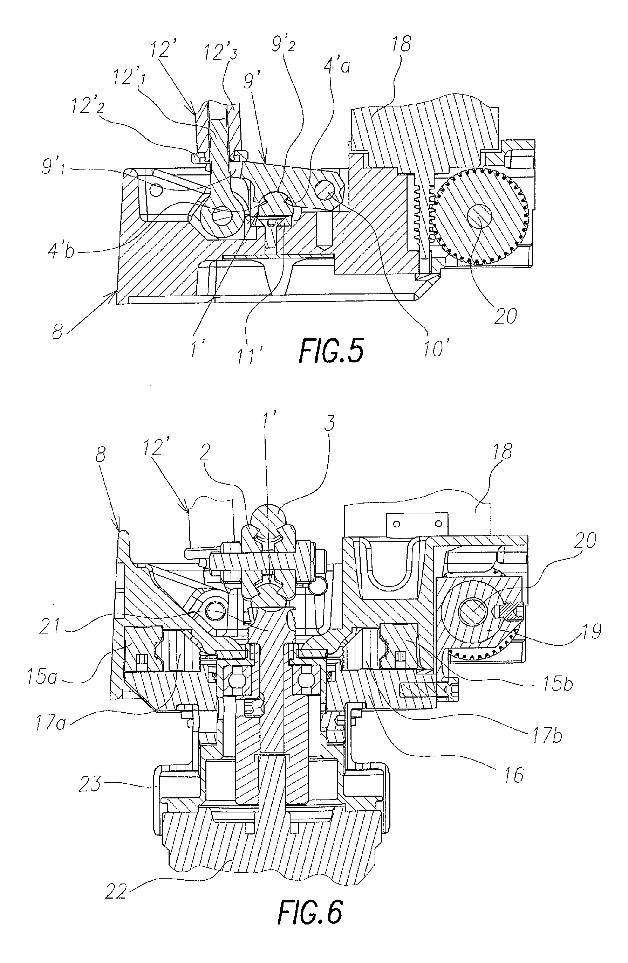

Les fils 1 et 1' sont raccordés entre eux au moyen d'une griffe de jonction 2 visible plus en détail sur la figure 6.

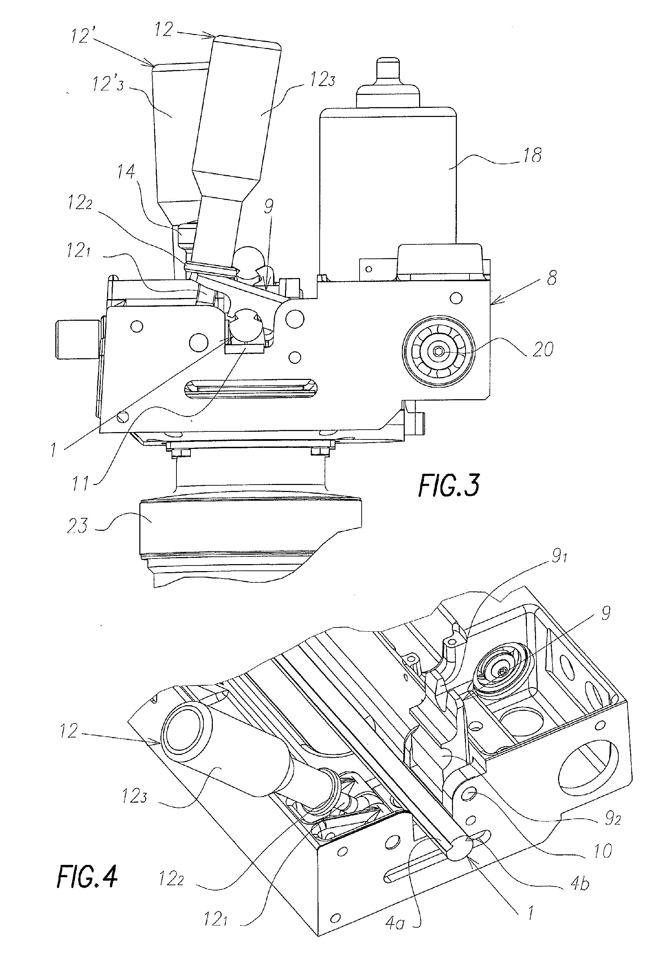

Sur cette figure 6 ainsi que sur la figure 5, on peut voir en coupe transversale le fil usé 1' tandis que le fil neuf 1 est visible sur les figures 3 et 4.

L'élément 3, représenté en coupe sur la figure 6, est un tronçon de fil qui n'a qu'un rôle d'entretoise pour la griffe de jonction 2, cette griffe pouvant d'ailleurs être d'une autre nature sans nécessiter cette entretoise.

La section des fils de contact 1, 1' présente, comme le montrent les figures 3 à 6, un profil sensiblement en « 8 » avec deux rainures latérales et longitudinales en « V » respectivement 4a, 4b (figure 4) et 4'a, 4'b (figure 5). C'est d'ailleurs dans ces rainures que la griffe de jonction 2 vient s'accrocher comme représenté sur la figure 6.

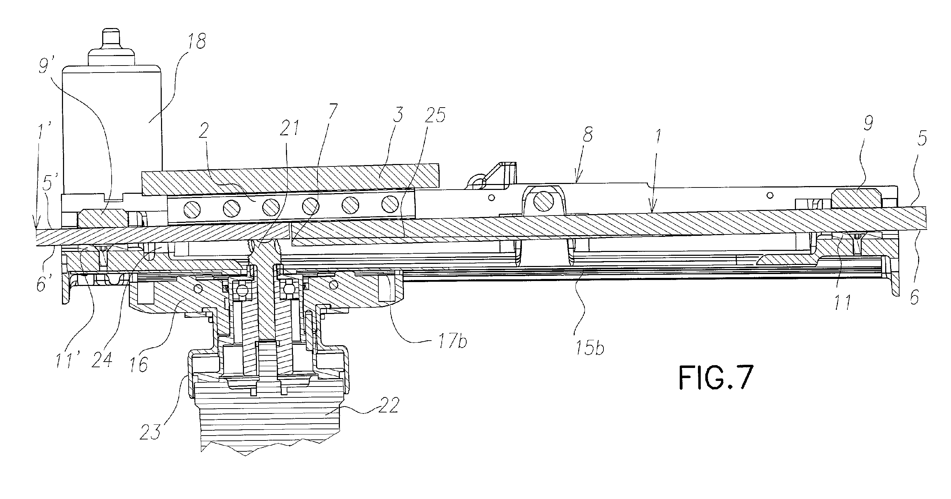

Comme le montre plus particulièrement la figure 7, la griffe de jonction 2 raboute les deux fils 1 et 1' de telle sorte que leurs extrémités en bout sont sensiblement en contact ou très légèrement écartées tandis que leurs surfaces de dessus 5, 5' qui sont opposées à leurs surfaces de contact ou de frottement 6, 6' disposées en dessous sont dans le prolongement l'une de l'autre.

Comme le montre encore la figure 7, à l'endroit de la jonction des fils 1 et 1' il existe donc un épaulement indésirable 7 que l'outil selon l'invention est destiné à supprimer par un enlèvement progressif de matière.

A cet effet, l'outil selon l'invention est positionné, comme le montrent les dessins, en grande partie sous les fils 1 et 1' et comporte un bâti 8 ouvert sur le dessus pour laisser passer et entourer partiellement les fils 1 et 1' et la griffe de jonction 2 (figures 5 et 6).

Pour sa fixation, le bâti 8 comporte ici deux systèmes de serrage formés chacun d'une bride 9, 9' montée pivotante autour d'un axe 10, 10' et destinée à venir sur la surface de dessus 5, 5' du fil de contact correspondant et d'une plaquette d'appui 11, 11' plate disposée sous le fil, au moins en partie au contact de la surface de frottement 6, 6' dudit fil, comme le montrent bien les figures 3, 5 et 7.

De préférence, la plaquette 11, 11' est aménagée de manière amovible au moyen, par exemple, d'une vis, pour des raisons de remplacement en cas d'usure et/ou de réglage comme il sera expliqué ci-après.

Les brides 9, 9' sont verrouillables en position de fermeture au moyen d'un levier de verrouillage 12, 12' monté pivotant.

Comme le montrent bien les figures 3, 4 et 5, les brides 9, 9' présentent chacun une extrémité fourchue 9₁, 9'₁ et une empreinte en creux et arrondie 9₂, 9'₂ de forme correspondant aux surfaces 5, 5' des fils tandis que le levier de verrouillage correspondant 12, 12' comporte une tige articulée 12₁, 12'₁, une rondelle de friction 12₂, 12'₂ et une poignée de vissage et de dévissage 12₃, 12'₃ (figures 3, 4 et 5).

Les extrémités fourchues 9₁, 9'₁ des brides 9 et 9' sont prévues pour venir encercler partiellement les tiges 12₁, 12'₁ des leviers 12, 12' en position de fermeture, comme le montrent les figures 3 et 5.

Le verrouillage des brides 9, 9' est obtenu par vissage des tiges 12, 12' au moyen des poignées 12₃, 12'₃ de manière telle que les rondelles 12₂, 12'₂ appuient avec force sur les brides 9, 9'.

Dans cette position de verrouillage, les empreintes 9₂, 9'₂ des brides 9, 9' s'appliquent parfaitement sur les surfaces correspondantes arrondies 5, 5' des fils 1, 1' (figures 3 et 5), quelle que soit la position de l'outil.

Comme le montre la figure 5, du côté du fil usé 1', ce dernier s'applique à plat sur la plaquette d'appui 11'.

Par l'usure le fil 1' présente en effet une surface usée sensiblement plane mais pas obligatoirement horizontale, notamment dans les tronçons de caténaires qui suivent des voies en courbe par exemple, de telle sorte que le bâti 8 peut présenter une position angulaire inclinée par rapport à une horizontale ou une verticale perpendiculaire à l'axe des fils.

Du côté du fil neuf 1 (figures 3 et 4), la surface de frottement 6 du fil est arrondie et s'applique au moins en partie sur la plaquette 11 en prenant la position angulaire imposée par le serrage du fil usé (figure 5).

De cette façon, on comprend que l'on obtient un positionnement parfait en orientation du bâti 8 par rapport au fil usé 1' en vue de l'usinage du fil neuf 1.

Le mode de fixation choisi dans ce mode de réalisation est très avantageux pour notamment la raison évoquée ci-avant à propos des surfaces usées en biais, mais l'invention n'exclut pas d'autres moyens de fixation tels qu'un serrage latéral des fils par exemple dans leurs rainures longitudinales.

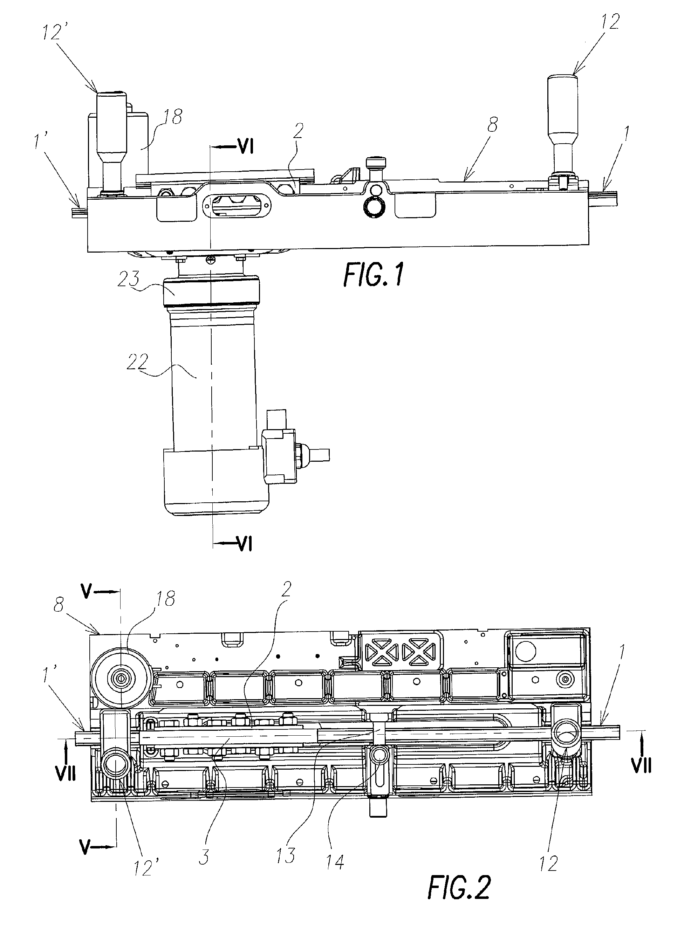

Pour aider à la mise en place de l'outil par l'utilisateur, le bâti 8 comporte en outre un moyen de suspension temporaire qui sert de moyen de retenue pour faciliter l'accrochage dont il vient d'être question et qui comporte ici une barrette 13 coulissante dans des moyens appropriés et qui est manoeuvrable par un bouton 14 (figures 2 et 3), ladite barrette 13 pouvant ainsi passer au-dessus du fil 1.

Le bâti 8 comporte deux glissières latérales 15a, 15b (figures 6 et 7) disposées de manière à présenter une légère inclinaison par rapport à la surface 6 du fil 1, c'est-à-dire aussi par rapport aux surfaces 5, 5' des fils 1, 1', en convergeant vers lesdits fils 1 et 1' du côté du fil usé 1'.

Les glissières 15a, 15b bien que parallèles à l'axe longitudinal du bâti 8, présentent l'inclinaison précitée tout naturellement du fait des moyens de serrage décrits ci-avant et comportant les éléments 9, 9' et 11, 11', comme le montre parfaitement la figure 7.

En effet, le bâti est appliqué sur les surfaces de frottement et donc de dessous 6, 6' des fils 1 et 1' par l'intermédiaire des plaquettes d'appui 11, 11' de telle sorte que la différence de niveau desdites surfaces 6, 6' entraîne une inclinaison du bâti 8, inclinaison qui peut être accrue par un positionnement volontairement plus bas de la plaquette 11 et/ou bien sûr aussi par les épaisseurs éventuellement différentes pour lesdites plaquettes 11, 11' selon la pente d'usinage voulue comme il sera expliqué ci-après.

Sur les glissières 15a, 15b, est disposé un chariot support 16 qui est monté de manière coulissante au moyen de coulisseaux (sous forme par exemple de patins à rouleaux) tels que 17a, 17b (figures 6 et 7).

Le chariot 16 est ici mû en translation le long des glissières 15a, 15b par un moteur 18 du type, par exemple, moto-réducteur qui entraîne un écrou 19 solidaire dudit chariot 16 par l'intermédiaire d'une vis rotative 20, celle-ci étant par exemple solidaire d'une roue dentée entraînée par une vis sans fin mue par le moteur 18 (figures 5 et 6).

Toutefois bien entendu, le chariot pourrait être mû manuellement.

Sur le chariot 16, est montée une fraise 21 pour un fraisage en bout, entraînée en rotation par un moteur 22 (figures 6 et 7). Selon l'invention, le fraisage en bout a été préféré à un fraisage en roulant mais ce dernier n'est évidemment pas exclu.

Selon un mode de réalisation, les moteurs 18 et 22 sont des moteurs électriques basse tension en courant continu, éventuellement alimentés par la même batterie, le moteur d'avance 18 ne pouvant en outre, par exemple, être mis en fonction qu'après la mise en fonctionnement du moteur 22 d'entraînement de la fraise 21.

L'ensemble fraise 21 et moteur 22 est en outre monté de manière réglable en translation dans la direction de l'axe de rotation de ladite fraise 21 au moyen par exemple d'une bague de vissage et de dévissage 23 qui permet à la fraise 21 de venir s'appliquer sur la surface 6' du fil 1'.

Pour assurer un travail parfait de la fraise 21, son axe de rotation doit être perpendiculaire (fraisage en bout) aux fils de contacts 1 et 1'.

Etant donné que les glissières sur lesquelles coulisse le chariot 16 sont inclinées par rapport à la surface 6, l'axe de la fraise 21 et du moteur 22 est ajusté pour être légèrement incliné par rapport à une normale aux glissières 15a, 15b de telle sorte que tout en se déplaçant en légère pente, la fraise 21 reste bien perpendiculaire au fil à usiner.

L'utilisation de l'outil et/ou le procédé d'usinage selon l'invention sont maintenant simples à comprendre.

Après avoir positionné l'outil temporairement sur les fils de contacts 1 et 1' au moyen de la barrette 13, l'outil est fixé par l'utilisateur à l'aide des fixations 9, 11, 12 et 9', 11', 12' après son calage sur la griffe de jonction 2 au moyen par exemple d'une butée 24 (figure 7) prévue sur le bâti 8 assurant ainsi le positionnement longitudinal de l'outil.

On comprend que le positionnement angulaire et longitudinal de l'outil est alors tout à fait correct par rapport aux fils et donc au plan d'usinage.

La fraise 21 est ensuite amenée à venir tangenter la surface de frottement 6' du fil 1' en manoeuvrant la bague 23, ce qui assure un point zéro.

En actionnant les moteurs 18 et 22, on comprend alors que la fraise 21 va suivre un mouvement translatif parallèle aux glissières 15a, 15b et enlever de la matière sur le fil 1 selon une pente égale à l'inclinaison desdites glissières par rapport aux surfaces 5, 5' ou 6 (voir le trait continu 25 qui représente la surface 6 du fil 1 après usinage).

La pente et donc la longueur d'usinage est par exemple choisie pour un enlèvement maximum de matière qui survient lorsque la différence d'épaisseur est par exemple de 4,5 mm.

Toutefois, comme déjà dit, la pente peut être réglable en prévoyant des épaisseurs différentes pour les plaquettes 11, 11'.

Si l'usinage paraît facilité en partant du fil usé afin d'ajuster la bonne hauteur pour la fraise 21, après un tel ajustement, on peut bien sûr imaginer un moyen de déplacement de la fraise pour commencer l'usinage à partir du fil neuf.

## Revendications

1. Outil d'usinage de la surface de frottement (6) d'un fil de contact (1) neuf de caténaire au voisinage de sa jonction au moyen d'une griffe de jonction (2) avec un fil de contact (1') en partie usé et qui comporte des moyens de fixation de l'outil sur les deux fils de contact (1,1'), et un moyen d'usinage (21) disposé sur un support (16) monté mobile sur des moyens de guidage (15a,15b), ***caractérisé* en ce que** les moyens de fixation de l'outil sont disposés de part et d'autre de la griffe de jonction (2) des deux fils, tandis que lesdits moyens de guidage (15a,15b) assurent un guidage en translation dudit moyen d'usinage (21) le long du fil de contact neuf (1) de façon inclinée par rapport à sa surface (6) de frottement afin d'enlever de la matière audit fil neuf sur une hauteur progressivement décroissante ou croissante selon le sens de l'usinage.

2. Outil d'usinage selon la revendication 1, ***caractérisé* en ce que** les moyens de fixation sont constitués par des moyens de serrage (9,11,12; 9',11',12')) qui viennent enserrer les fils de contact (1,1') de part et d'autre de la griffe de jonction (2).

3. Outil d'usinage selon la revendication 2, ***caractérisé* en ce que** les moyens de serrage, comportent des brides pivotantes (9,9') et verrouillables en position, destinées à venir s'appliquer sur les surfaces (5,5') des fils de contact qui sont opposées à leurs surfaces de frottement (6,6') afin que lesdits fils soient enserrés entre lesdites brides et des plaquettes d'appui (11,11') disposées en regard des brides sur lesdites surfaces de frottement (6,6') des fils de contact.

4. Outil d'usinage selon la revendication 3, ***caractérisé* en ce que** chaque bride pivotante (9,9') présente une empreinte en creux (9₂,9'₂) de forme correspondante à la surface (5,5') qui est opposée à la surface de frottement d'un fil de contact, ladite empreinte étant destinée à s'appuyer sur ladite surface (5,5').

5. Outil d'usinage selon l'une des revendications 3 et 4, ***caractérisé* en ce** chaque bride (9,9') présente une extrémité fourchue (9₁,9'₁) destinée à venir encercler en partie une tige (12₁,12'₁) d'un levier de verrouillage (12,12') pivotant muni d'une rondelle (12₂,12'₂) qui vient s'appuyer sur ladite extrémité (9₁,9'₁) de la bride (9,9').

6. Outil d'usinage selon l'une des revendications 3 à 5, ***caractérisé* en ce que** les plaquettes d'appui (11,11') sont plates et de préférence amovibles.

7. Outil d'usinage selon l'une quelconque des revendications 1 à 6, ***caractérisé* en ce que** le support mobile sur lequel est aménagé le moyen d'usinage (21) est un chariot (16), tandis que les moyens de guidage en translation dudit chariot comportent des glissières (15a,15b) qui sont inclinées par rapport à la surface de frottement (6) du fil neuf (1) du fait des moyens de serrage qui enserrent les fils de contact (1,1') qui ont des épaisseurs différentes et/ou du fait du réglage desdits moyens de serrage.

8. Outil d'usinage selon la revendication 7, ***caractérisé* en ce que** le chariot (16) est entraîné en translation de manière motorisée (18).

9. Outil d'usinage selon l'une quelconque des revendications 1 à 8, ***caractérisé* en ce que** le moyen d'usinage est une fraise (21) de fraisage en bout, qui est réglable en position dans la direction de son axe de rotation.

10. Outil d'usinage selon l'ensemble des revendications 7 à 9, ***caractérisé* en ce que** la fraise (21) est disposée sur le chariot (16) de telle manière que son axe de rotation soit légèrement incliné par rapport à une normale aux glissières (15a,15b) de guidage du chariot afin que ledit axe de rotation soit sensiblement perpendiculaire aux fils de contact (1,1').

11. Outil d'usinage selon l'une quelconque des revendications 1 à 10, **caractérisé en ce qu'**il comporte une butée (24) destinée à venir au contact de la griffe de jonction (2) des fils (1,1') afin d'assurer son positionnement longitudinal.

12. Outil d'usinage selon l'une quelconque des revendications 1 à 11, ***caractérisé* en ce qu'**il comporte en outre des moyens de suspension temporaire (13,14) sur au moins l'un (1) des fils de contact.

13. Outil d'usinage selon la revendication 12, ***caractérisé* en ce que** les moyens de suspension temporaire comportent au moins une barrette coulissante (13) destinée à venir au-dessus du fil de contact (1).

14. Procédé d'usinage d'un fil de contact (1) neuf d'une caténaire au voisinage de sa jonction avec un fil de contact (1') en partie usé, ***caractérisé* en ce qu'**il consiste à suspendre temporairement un outil d'usinage au voisinage de ladite jonction, à fixer l'outil sur lesdits fils de part et d'autre de leur jonction, à régler une référence zéro d'un moyen d'usinage sur le fil de contact usé (1') et à déplacer ledit moyen d'usinage le long du fil neuf (1) en s'écartant régulièrement de celui-ci afin de lui enlever de la matière sur une hauteur progressivement décroissante.
